# FASCICULE DE BREVET EUROPEEN

(11) **EP 2 152 124 B1**
(45) Date de publication et mention de la délivrance du brevet: **24.10.2012**
(21) Numéro de dépôt: 08805742.7
(22) Date de dépôt: 05.05.2008
(51) Int. Cl.: A47C 23/00, F16F 1/02, F16F 1/18, F16F 3/02

(54) **ORGANE ELASTIQUE DE SUSPENSION EN MATIERE PLASTIQUE DE TYPE RESSORT, ROTULE OU SIMILAIRE POUR SOMMIER, MATELAS OU SIEGE**
FEDER- ODER GELENKARTIGES ELASTISCHES AUFHÄNGUNGSELEMENT AUS KUNSTSTOFF FÜR BETTGESTELLE, MATRATZEN ODER STÜHLE
ELASTIC SUSPENSION MEMBER OF PLASTIC MATERIAL AND OF THE SPRING OR BALL AND SOCKET TYPE OR THE LIKE FOR BED BASE, MATTRESS OR SEAT

(30) Priorité: 09.05.2007 FR 0703315
(43) Date de publication de la demande: 17.02.2010
(73) Titulaire: DELAHOUSSE ET FILS, 49320 Vauchrétien (FR)
(72) Inventeur: DELAHOUSSE, Marc, 49000 Angers (FR); GREGOIRE, Olivier, 49320 Coutures (FR)
(74) Mandataire: Michelet, Alain
(86) Numéro de dépôt international: PCT/FR2008/050788
(87) Numéro de publication internationale: WO 2008/148992

(56) Documents cités:
- EP-A- 1 122 457
- DE-U1- 20 000 403
- US-A- 3 879 025

## Description

La présente invention concerne un organe élastique de suspension en matière plastique, de type ressort, rotule ou similaire, pour sommier, matelas ou siège. Un organe élastique compprenant les caractéristiques du preambule de la revendication 1 est coonu du document DE 200 0403 U1.

On connait de très nombreuses variantes d'organes élastiques de suspension en matière plastique utilisés à titre de ressorts au sein d'une structure de matelas ou de siège, ou encore à titre de rotule pour des sommiers à lattes ou multi-éléments.

A titre indicatif, une structure connue de tels organes de suspension, constituée d'un assemblage de Vé de suspension, est décrite dans le document US-2 433 012.

Cependant, les organes élastiques actuels n'offrent pas, pour certains, des caractéristiques de suspension optimales. D'autres présentent des structures relativement complexes, par exemple obtenues par l'assemblage de plusieurs pièces (embase, élément de suspension, plateau ...), ou de type pièce monobloc nécessitant des outillages complexes, coûteux et peu productifs.

La présente invention a pour objectif de remédier à ces inconvénients en proposant une nouvelle structure de suspension, simple à produire par une technique de moulage, et disposant de caractéristiques de compressibilité intéressantes.

Cet organe élastique de suspension est défini par la revendication 1 et comprend, de manière classique, une embase et une tête entre lesquelles est interposé un élément élastique de suspension ; il comprend également un axe longitudinal central de suspension A. Conformément à la présente invention l'élément élastique de suspension est constitué de trois structures élastiques identiques ou sensiblement identiques, formées chacune d'au moins deux bras rectilignes ou sensiblement rectilignes juxtaposés, raccordés deux à deux par une articulation pour former un ou plusieurs Vé(s) de suspension actifs chacun selon un plan de suspension perpendiculaire à ladite articulation, lesdits plans de suspension desdites trois structures élastiques se recoupant au niveau de l'axe central longitudinal A dudit organe de suspension, et étant décalés deux à deux selon un angle de l'ordre de 120°.

De préférence, les bras des structures élastiques sont constitués de lames plates qui s'étendent chacune dans un plan perpendiculaire au plan de suspension associé ; ces lames plates sont raccordées deux à deux par une articulation qui s'étend également perpendiculairement audit plan de suspension.

Selon une autre particularité, les axes de suspension des structures élastiques sont parallèles les uns aux autres et parallèles à l'axe longitudinal central A de l'organe de suspension, lesdits axes de suspension étant positionnés sur le même cercle centré sur ledit axe central A, séparés deux à deux d'un secteur angulaire de 120°.

Selon l'invention , les structures élastiques de l'élément de suspension comportent chacune au moins trois bras juxtaposés, et elles sont en outre avantageusement reliées ensemble par au moins un organe de liaison, en particulier pour favoriser la stabilité de l'organe de suspension et ainsi contraindre lesdites structures élastiques à se déformer selon leur axe de suspension respectif.

Le ou les organes de liaison correspondants se composent avantageusement de trois branches qui s'étendent de manière rayonnée à partir d'une partie centrale commune. L'extrémité extérieure de chacune de ces branches est de préférence reliée à l'une des articulations « interne » de l'une des structures élastiques.

Encore de préférence, toutes les articulations « internes » des structures élastiques sont, sur un même niveau, reliées ensemble par un organe de liaison.

Le ou les organes de liaison sont réalisés monobloc avec les bras des structures élastiques.

Selon une forme de réalisation particulière, l'organe élastique comporte un organe de liaison unique positionné dans un plan qui s'étend approximativement à égale distance de l'embase et de la tête.

Selon l'invention les différentes parties de l'organe de suspension, à savoir tête, embase et é ément de suspension, sont réalisées monobloc par moulage de matière thermoplastique du type élastomère.

Mais l'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective d'une forme de réalisation possible de l'organe élastique de suspension conforme à l'invention ;
- la figure 2 montre l'organe élastique de la figure 1, ici encore illustré en perspective, vu sous un autre angle ;
- la figure 3 est une vue de face de l'organe élastique illustré sur les figures 1 et 2 ;
- la figure 4 est encore une vue de face du même organe élastique, ici illustré sous un autre angle ;
- la figure 5 est une vue en coupe selon V-V de la figure 3 ;
- la figure 6 est une vue en coupe qui montre schématiquement le moule de fabrication de l'organe élastique des figures 1 à 5 ;
- la figure 7 est une vue en perspective d'une première variante de réalisation d'un organe élastique conforme à l'invention ;
- la figure 8 est une vue de face d'une seconde variante de réalisation d'un organe élastique conforme à l'invention ;
- la figure 9 est une vue schématique, de face, d'une troisième variante de réalisation d'un organe élastique conforme à l'invention ;
- la figure 10 est une vue schématique, de face, d'une quatrième variante de réalisation d'un organe élastique conforme à l'invention ;
- la figure 11 est une vue schématique, de face, d'une cinquième variante de réalisation d'un organe élastique conforme à l'invention.

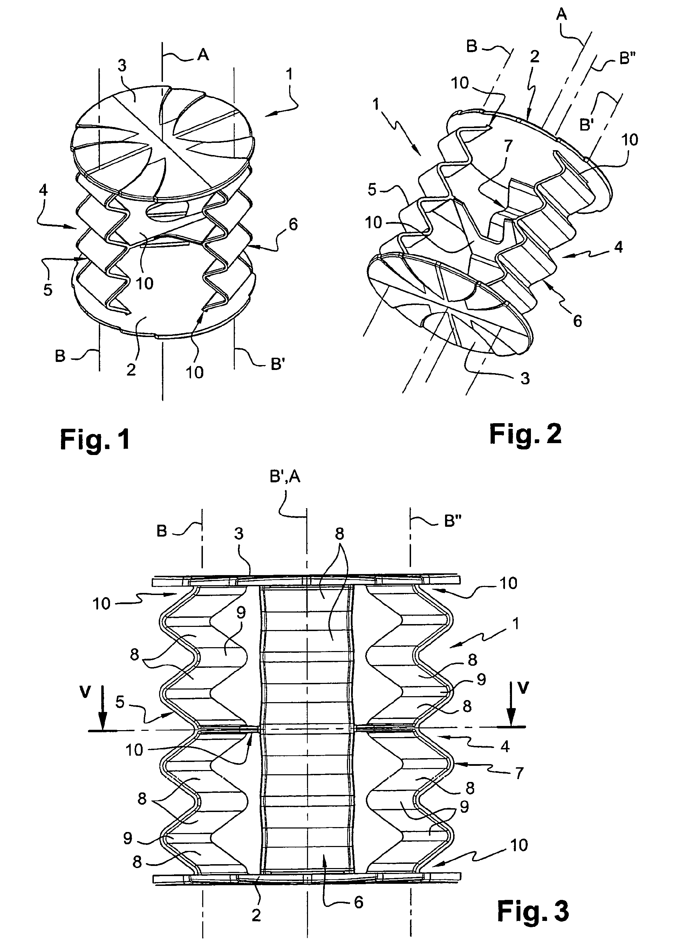

Tel qu'illustré sur les figures 1 à 5, l'organe élastique 1 est en forme de ressort constitué d'une embase 2 et d'une tête 3 entre lesquelles est interposé un élément élastique de suspension 4. Cet organe élastique 1 comporte un axe longitudinal central A, correspondant à l'axe de compression/décompression de l'élément élastique de suspension 4.

L'élément élastique de suspension 4 est adapté pour tendre à écarter la tête 3 de l'embase 2 lorsque ces deux éléments ont été rapprochés par compression, et pour tendre alors à retrouver la position stable illustrée sur les figures.

L'élément de suspension 4 est constitué de trois structures élastiques identiques 5, 6 et 7 formées chacune de plusieurs bras rectilignes 8 (en l'occurrence huit), raccordés entre eux, deux à deux, au niveau de l'une de leurs extrémités par une charnière d'articulation 9, pour former des Vé de suspension juxtaposés.

Les bras 8 qui jouxtent l'embase 2 et la tête 3 sont raccordés à ces dernières par une charnière d'articulation 10.

Les bras 8 sont orientés alternativement dans un sens et dans l'autre pour conférer aux structures élastiques 5, 6 et 7 une structure en accordéon compressible.

Chacune de ces structures élastiques 5, 6 et 7 comporte un axe de suspension, respectivement B, B' et B", qui sont tous parallèles entre eux et aussi parallèles à l'axe central longitudinal A de l'organe élastique 1.

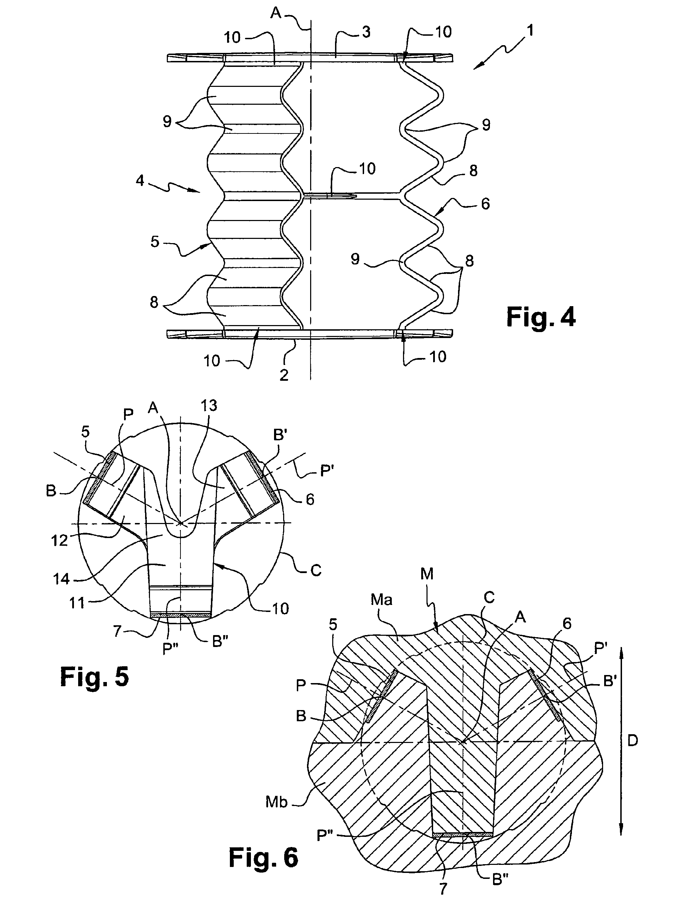

Ces trois axes de suspension B, B', B" sont répartis uniformément sur un même cercle C centré sur l'axe A (figure 5). Sur ce cercle C, les différents axes de suspension B, B' et B" sont séparés deux à deux d'un secteur angulaire de 120° (ou de l'ordre de 120°).

D'autre part, les structures élastiques 5, 6 et 7 (et les Vé de suspension qui les composent) sont actives dans des plans de suspension, respectivement P, P' et P" qui sont sécants sur l'axe longitudinal central A de l'organe élastique 1 (figure 5). Les plans de suspension P, P' et P" correspondants sont des plans qui passent par les axes de suspension associés B, B' et B", et qui sont perpendiculaires aux axes correspondants aux charnières d'articulation 9. Ces plans de suspension P, P' et P" sont décalés deux à deux selon un angle de 120° (ou de l'ordre de 120°).

Les bras 8 des Vé de suspension se présentent sous la forme de lames plates qui s'étendent dans un plan - perpendiculaire aux plans de suspension associés P, P', P", et - incliné par rapport à celui passant par l'embase 2 ou la tête 3.

Les bras 8 ont tous la même longueur et la même largeur.

Les articulations 9 des trois structures de suspension 5, 6 et 7 se situent successivement dans des plans parallèles entre eux, en permanence à égale distance de la tête 3 et de l'embase 2. Du fait de la configuration générale en accordéon des structures élastiques 5, 6 et 7, une articulation 9 sur deux desdites structures est positionnée du côté extérieur de l'organe ressort 1, et une articulation 9 sur deux s'étend donc intérieurement, situées du côté de l'axe central A.

Les caractéristiques de compressibilité de l'organe de suspension 1 sont essentiellement liées au travail des charnières de raccordement 9, 10, éventuellement aussi un peu à la flexion des bras 8.

Sur les figures 1 à 5, les éléments d'embase 2 et de tête 3 consistent en de simples plateaux. Bien entendu, ils peuvent prendre des formes plus complexes, adaptées à la fonction que l'on cherche à leur faire remplir (simple élément d'appui plan, fixation sur un châssis, organe de réception d'une latte ou d'un plateau de suspension ...). Ces éléments d'embase 2 et de tête 3 peuvent aussi être équipés de tout moyen de fixation permettant de monter plusieurs ressorts 1 entre eux.

D'autre part, le nombre de bras 8 des structures de suspension sera adapté selon les caractéristiques de compressibilité recherchées de l'organe ressort 1 et selon les caractéristiques dimensionnelles du site à équiper. De préférence, ce nombre est compris entre 2 et 10 ; de préférence encore, il est compris entre 3 et 8.

Cet organe de suspension 1 est adapté et conformé pour être obtenu très simplement, de manière monobloc, par moulage de matière thermoplastique genre élastomère.

La structure de l'organe de suspension 1 (et en particulier celle de l'élément élastique 4) est adaptée pour pouvoir être démoulée de manière dite « naturelle », au moyen d'un moule en deux parties. Pour cela, les trois structures élastiques 5, 6 et 7 de l'élément de suspension 4 s'étendent à distance l'une de l'autre, et elles sont écartées l'une de l'autre par rapport à un axe passant par les plans de suspension P, P', P" comme on peut le voir sur les figures 3 et 5.

Sur la figure 6, on a représenté une forme de réalisation possible du moule M en deux parties Ma et Mb, convenant pour la fabrication de l'organe ressort 1 à partir d'une matière plastique élastomère. Sur cette figure 6, on a représenté l'axe de démoulage D.

On remarque que cet axe de démoulage D est parallèle au plan de suspension (en l'occurrence P") de l'une des structures élastiques (en l'occurrence 7).

Par ailleurs, comme illustré sur les figures 1 à 4, l'organe élastique 1 comporte avantageusement un organe 10 qui relie les trois structures élastiques 5, 6, 7. En l'occurrence, l'organe de liaison 10 relie les structures élastiques 5, 6, 7 au niveau de l'une de leurs charnières 9 en vis-à-vis (et en particulier une de leurs charnières « interne », c'est-à-dire située du côté de l'axe central A).

Cette structure de liaison 10, détaillée figure 5, consiste en une lame plane de matière qui se compose de trois branches 11, 12, 13 s'étendant de manière rayonnée à partir d'une zone centrale commune 14. Cette lame de liaison plane 10 s'étend ici dans le plan médian de l'organe élastique 1, parallèlement ou sensiblement parallèlement à la tête 3 et à l'embase 2.

Le rôle de cet organe de liaison 10 est de favoriser la stabilité de l'organe élastique 1 et de contraindre les structures 5, 6, 7 à se déformer selon leur axe de suspension respectif B, B', B".

Cette lame de liaison 10 est réalisée monobloc avec le reste de la structure.

On comprend bien que l'on peut adapter à souhait le nombre d'organes de liaison 10, notamment en fonction du nombre de bras 8, ainsi que des caractéristiques de compressibilité et de stabilité souhaitées.

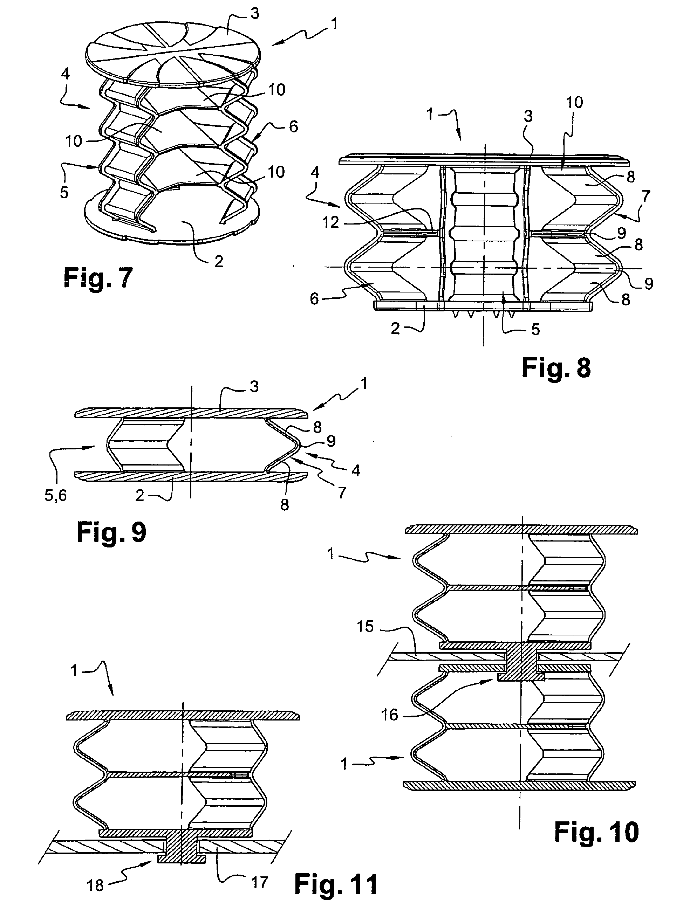

Les figures 7 à 11 illustrent différentes variantes de réalisation d'un organe élastique 1 conforme à l'invention.

Dans les différents modes de réalisation illustrés, les parties identiques ou similaires au mode de réalisation des figures 1 à 5 conservent les mêmes repères par mesure de simplification.

La variante de réalisation de la figure 7 est très voisine de celle illustrée sur les figures 1 à 5. Ici, cependant, l'organe de suspension 1 comporte trois organes de liaison 10 en forme de lames de matière, disposées parallèlement les unes aux autres. Plus particulièrement, toutes les charnières « internes » 9 d'un même niveau, des structures élastiques 5, 6, 7, sont reliées à un organe de liaison 10.

Dans le mode de réalisation de la figure 8, les structures élastiques 5, 6 et 7 sont constituées chacune de quatre bras 8.

Leurs seules et uniques charnières « internes » 9 sont reliées ensemble par un organe de liaison 10.

L'élément de tête 3 est en forme de simple plateau d'appui, alors que l'élément d'embase 2 comporte des moyens de fixation appropriés pour pouvoir être fixé sur le support désiré, par exemple un plateau ou une feuille.

La figure 9 illustre un mode de réalisation simplifié de l'organe de suspension 1, avec trois structures de suspension 5, 6, 7 composées chacune de deux bras 8 reliés par une unique charnière 9.

La figure 10 illustre la fixation de deux organes élastiques 1 conforme à l'invention sur une feuille de matière 15, de part et d'autre de cette feuille. Les deux organes élastiques 1 comportent des moyens de liaison 16 appropriés (par exemple du type tenon/mortaise ménagés sur leurs embases respectives) pour assurer leur solidarisation au travers d'un orifice ménagé dans la feuille 15.

La figure 11 illustre la fixation d'un organe élastique 1 conforme à l'invention sur un plateau rigide 17, au moyen d'un système de liaison adapté 18 (avantageusement amovible), par exemple du type tenon/mortaise.

L'organe élastique de suspension illustré sur les figures décrites ci-dessus consiste en un organe ressort destiné à être inséré au sein de la structure d'un matelas ou d'un siège.

Dans des variantes de réalisation, l'embase et la tête de cet organe de suspension peuvent être adaptés pour constituer une rotule de suspension pour latte(s) de sommier, une structure de suspension pour le plateau d'un sommier de type multi-éléments, ou encore un système de variation de fermeté pour latte(s) de sommier.

L'invention permet d'obtenir un ensemble de suspension stable et disposant d'un bon équilibre.

## Revendications

1. Organe élastique de suspension, de type ressort, rotule ou similaire, pour sommier, matelas ou siège, lequel organe élastique (1), réalisé monobloc par moulage de matière thermoplastique, comprend une embase (2) et une tête (3) entre lesquelles est interposé un élément élastique de suspension (4), et lequel organe élastique (1) comprend un axe longitudinal central de suspension (A), ledit élément élastique de suspension (4) étant constitué de trois structures élastiques identiques (5, 6 et 7), ou sensiblement identiques, formées chacune d'une juxtaposition de bras (8) rectilignes ou sensiblement rectilignes, raccordés deux à deux par une articulation (9) pour former des Vés de suspension actifs chacun selon un plan de suspension (P, P', P") perpendiculaire à ladite articulation (9), lesdits plans de suspension (P, P', P") desdites trois structures élastiques (5, 6, 7) se recoupant au niveau dudit axe longitudinal de suspension (A), et lesquels plans de suspension (P, P', P"), sont décalés deux à deux selon un angle de l'ordre de 120°, **caractérisé en ce que** les structures élastiques (5, 6, 7) de l'élément de suspension (4) comportent chacune au moins trois bras (8) juxtaposés, et sont reliées par au moins un organe de liaison (10), en particulier pour favoriser sa stabilité et ainsi contraindre lesdites structures élastiques (5, 6, 7) à se déformer selon leur axe de suspension respectif (B, B', B").

2. Organe élastique de suspension selon la revendication 1, **caractérisé en ce que** les bras (8) des structures élastiques (5, 6, 7) sont constitués de lames plates qui s'étendent chacune dans un plan perpendiculaire aux plans de suspension associés (P, P', P"), raccordées deux à deux par une articulation (9) qui s'étend également perpendiculairement auxdits plans de suspension (P, P', P").

3. Organe élastique de suspension selon l'une quelconque des revendications 1 ou 2, **caractérisé en ce que** les axes de suspension (B, B', B") des structures élastiques (5, 6, 7) sont parallèles les uns aux autres et parallèles à l'axe longitudinal central (A) dudit organe de suspension (1), lesdits axes de suspension (B, B', B") étant positionnés sur le même cercle (C) centré sur ledit axe central (A), séparés deux à deux d'un secteur angulaire de 120°.

4. Organe élastique de suspension selon l'une quelconque des revendications 1 à 3, **caractérisé en ce qu'**il comprend au moins un organe de liaison (10) en forme de lame plane qui se compose de trois branches (11, 12, 13) s'étendant de manière rayonnée à partir d'une partie centrale commune (14).

5. Organe élastique de suspension selon la revendication 4, **caractérisé en ce que** l'extrémité extérieure de chacune des branches (11, 12, 13) de l'organe de liaison (10) est reliée à l'une des articulations « internes » (9) de l'une des structures élastiques (5, 6, 7).

6. Organe élastique de suspension selon la revendication 5, **caractérisé en ce que** toutes les articulations (9) « internes » des structures élastiques (5, 6, 7) sont, sur un même niveau, reliées ensemble par un organe de liaison (10).

7. Organe élastique de suspension selon l'une quelconque des revendications 4 ou 5, **caractérisé en ce qu'**il comporte un organe de liaison (10) unique positionné dans un plan qui s'étend approximativement à égale distance de la tête (3) et de l'embase (2).

## Claims

1. An elastic suspension member, of the spring or ball-and-socket type or the like, for bed base, mattress or seat, said elastic member (1), made single piece bey moulding of of thermoplastic comprising a base (2) and a head (3) between which an elastic suspension member (4) is interposed, and said elastic member (1) comprising a central longitudinal suspension axis (A), said elastic suspension member (4) being made up of three identical or substantially identical elastic structures (5, 6 and 7), each formed of a juxtaposition of rectilinear or substantially rectilinear arms (8), connected together, by pairs, by a hinge (9) in order to form suspension Vs, each active in a suspension plane (P, P', P") perpendicular to said hinge (9), said suspension planes (P, P', P") of said three elastic structures (5, 6, 7) intersecting each other at said longitudinal suspension axis (A), and said suspension planes (P, P', P") are offset, by pairs, by an angle of about 120°, **characterized in that** the elastic structures (5, 6, 7) of the suspension element (4) each comprise at least three juxtaposed arms (8), and are connected together by at least connecting member (10), in particular to favour the stability thereof and thus to force said elastic structures (5, 6, 7) to deform along their respective suspension xis (B, B', B").

2. An elastic suspension member according to claim 1, **characterized in that** the arms (8) of the elastic structures (5, 6, 7) are made up of flat blades each extending in a plane perpendicular to the associated suspension plane (P, P', P"), and connected together, by pairs, by a hinge (9) which also extends perpendicular to said suspension planes (P, P', P").

3. An elastic suspension member according to any one of claims 1 or 2, **characterized in that** the suspension axis (B, B', B") of the elastic structures (5, 6, 7) are parallel to each other and parallel to the central longitudinal axis (A) of said suspension member (1), said suspension axis (B, B', B") being positioned on the same circle (C) centred to said central axis (A), separated, by pairs, by an angular sector of 120°.

4. An elastic suspension member according to any one of the claims 1 to 3, **characterized in that** it comprises at least one connecting member (10) in the form of flat blade which is composed of three legs (11, 12, 13) that extend radiantly from a common central part (14).

5. An elastic suspension member according to claim 4, **characterized in that** the outer end of each of the legs (11, 12, 13) of the connecting member (10) is connected to one of the "inner" hinges (9) of one of the elastic structures (5, 6, 7).

6. An elastic suspension member according to claim 5, **characterized in that** all the "inner" hinges (9) of the elastic structures (5, 6, 7) are, at a same level, connected together by a connecting member (10).

7. An elastic suspension member according to any one of claims 4 or 5, **characterized in that** it it comprises a single connecting member (10) positioned in a plane that extends approximately at equal distance the head (3) and the base (2).

## Patentansprüche

1. Elastisches Aufhöngungselement vom Typ Feder, Drehgelenk oder dergleichen, für Bettgestelle, Matratzen oder Stühle, wobei das elastische Element (1), das durch Thermoplastguss in einem Stück hergestellt ist, einen Sockel (2) und einen Kopf (3) umfasst, zwischen denen ein elastisches Aufhängungselement (4) ungeordnet ist, und wobei das elastische Element (1) eine zentrale Aufhängungslängsachse (A) umfasst, wobei das elastische Aufhängungselement (4) von drei identischen elastischen oder im Wesentlichen identischen Strukturen (5, 6 und 7) gebildet ist, die jeweils durch ein Nebeneinanderlegen von geraden oder im Wesentlichen geraden Armen (8) gebildet sind, die zwei und zwei durch ein Gelenk (9) verbunden sind, um Aufhöngungs-V's zu bilden, die jeweils entlang einer Aufhängungsebene (P, P', P") senkrecht zu dem Gelenk (9) aktiv sind, wobei sich die Aufhängungsebenen (P, P', P") der drei elastischen Strukturen (5, 6, 7) im Bereich der Aufhängungslüngsachse (A) schneiden, und wobei die Aufhüngungsebenen (P, P', P") zwei und zwei in einem Winkel von ungefähr 120° versetzt sind, **dadurch gekennzeichnet, dass** die elastischen Strukturen (5, 6, 7) des Aufhöngungselements (4) jeweils mindestens drei nebeneinander liegende Arme (8) umfassen und durch mindestens ein Verbindungselement (10) verbunden sind, um insbesondere die Stabilität zu fördern und so die elastischen Strukturen (5, 6, 7) dazu zu zwingen, sich entlang ihrer jeweiligen Aufhängungsachse (B, B'. B") zu verformen.

2. Elastisches Aufhängungselement nach Anspruch 1, **dadurch gekennzeichnet, dass** die Arme (8) der elastischen Strukturen (5, 6, 7) von flachen Plättchen gebildet sind, die sich jeweils in einer Ebene senkrecht zu den zugehörigen Aufhängungsebenen (P, P', P") erstrecken, die zwei und zwei durch ein Gelenk (9) verbunden sind, das sich ebenfalls senkrecht zu Aufhöngungsebenen (P, P', P") erstreckt.

3. Elastisches Aufhöngungselement nach einem der Ansprüche 1 oder 2, **dadurch gekennzeichnet, dass** die Aufhöngungsachsen (B, B', B") der elastischen Strukturen (5, 6, 7) zueinander parallel und zur zentragen Längsachse (A) des Aufhängungselements (1) parallel sind, wobei die Aufhängunsachsn (B, B', B") auf demselben Kreis (C), der auf die Zentralachse (A) zentriert ist, angeordnet und zwei und zwei um einen Winkelsektor von 120° getrennt sind.

4. Elastisches Aufhängungselement nach einem der Ansprüche 1 bis 3, **dadurch gekennzeichnet, dass** es mindestens ein verbindungselement (10) in Form eines flachen Plättchens umfasst, das aus drei Schenkeln (11, 12, 13) besteht, die sich strahtenförmig von einem gemeinsamen zentralen Teil (14) aus erstrecken.

5. Elastisches Aufhangungselement nach Anspruch 4, **dadurch gekennzeichnet, dass** das äußere Ende jedes der Schenkel (11, 12, 13) des Verbindungselements (10) mit einem der "inneren" Gelenke (9) einer der elastischen Strukturen (5, 6, 7) verbunden ist.

6. Elastisches Aufhängungselement nach Anspruch 5, **dadurch gekennzeichnet, dass** alle "inneren" Gelenke (9) der elastischen Strukturen (5, 6, 7) auf einer selben Höhe durch das Verbindungselement (10) miteinander verbunden sind.

7. Elastisches Aufhängungselement nach einem der Anspruche 4 oder 5, **dadurch gekennzeichnet** ass es ein einziges Verbindungselement (10) umfasst, das in einer Ebene angeordnet ist, die sich annähernd in gleichem Abstand zum Kopf (3) und zum Sockel (2) erstreckt.
